# EUROPEAN PATENT APPLICATION

(11) **EP 4 745 694 A1**
(43) Date of publication of application: **20.05.2026**
(21) Application number: 25211332.9
(22) Date of filing: 27.10.2025
(51) Int. Cl.: G05B 19/414

(54) **ACTUATOR CONTROL SYSTEM WITH REDUNDANT POSITION SENSOR ARCHITECTURE**

(30) Priority: 19.11.2024 US 202418951914
(71) Applicant: Honeywell International Inc., Charlotte, NC 28202 (US)
(72) Inventor: HANUS, Petr, Charlotte, 28202 (US); HORNER, Darrel W., Charlotte, 28202 (US); JASANSKY, Michal, Charlotte, 28202 (US)
(74) Representative: Ingrassia, Fisher & Lorenz UK Ltd.

(57) **Abstract**

A system configuration significantly reduces the number of interconnections needed between an electromechanical actuator (EMA) and an EMA controller (EMAC) while maintaining redundancy and other safety aspects needed by the target application. This allows simplification of communication interfaces between multiple sensors in the EMA and EMAC and unification of the interface to multiple sensors inside the EMAC, leading to cost and weight reduction that can be significant for many aerospace products and applications, including unmanned vehicle (e.g., UAM/UAV) applications.

## Description

### TECHNICAL FIELD

The present disclosure relates to actuator control systems, and more particularly relates to an actuator control system with redundant position sensor architectures.

### BACKGROUND

Modern aircraft are evolving to a more-electric architecture for actuation requirements, including for flight control surface control, engine tilt control, and propeller pitch control - as well as a number of other utility applications. More electric control relies on the use of electro-mechanical actuators (EMAs) with electro-mechanical motors. Electro-mechanical actuators in turn rely on electro-mechanical actuator controllers (EMACs). Some aircraft actuation requirements are categorized as flight critical and thus require high integrity EMA control to prevent loss of control or erroneous control. Because of the flight criticality, EMACs, which contain electronic circuitry and software, must also be of high integrity.

Most EMAs contain output position sensors that the EMACs utilize as feedback for their control. For example, many EMAs include a motor commutation sensor and an actuator rod position sensor. Both sensors provide position feedback to the EMAC control logic. Generally, each unique EMA sensor is interfaced via its own electrical signals to the EMAC. In the case of redundant motor and or actuator position sensors, each part of the redundant sensor is interfaced via a separate independent set of signals to achieve robustness and redundancy. This configuration increases number of interconnecting wires between the EMA and EMAC, adding weight to both EMA and EMAC (connector size and number of wires needed for internal wiring inside both EMA and EMAC) and adding weight to the interconnection cable bundle between the EMA and EMAC (high number of interconnecting wires).

Hence, there is a need for a sensor configuration that does not exhibit the drawbacks described above. The instant disclosure addresses this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, an actuator control system includes an actuator controller and an actuator. The actuator controller is coupled to receive position command data that is indicative of a commanded position of a component and is configured, upon receipt of the position command data, to generate and supply actuator commands. The actuator is in operable communication with, and is coupled to receive the actuator commands from, the actuator controller. The actuator is configured, upon receipt of the actuator commands, to move the component to the commanded position and to supply feedback data to the actuator controller. The actuator includes an actuator motor, an actuator output interface, a first printed circuit board, a second printed circuit board, a plurality of actuator output position sensors, a plurality of motor position sensors, a plurality of actuator output position processors, a plurality of motor position processors, a first sensor communication bus, and a second sensor communication bus. The actuator motor is moveable to a rotational motor position. The actuator output interface is coupled to the motor and is adapted to be coupled to the component. The actuator output interface is moveable to an actuator output position. Each actuator output position sensor is mounted on the first printed circuit board and is configured to supply actuator position data representative of the actuator output position. Each motor position sensor is mounted on the second printed circuit board and is configured to supply motor position data representative of the rotational motor position. The actuator output position processors are mounted on the first printed circuit board. Each actuator output position processor is in operable communication with, and is coupled to receive the actuator position data from, a different one of the actuator output position sensors. Each actuator output position processor is configured to process the actuator position data it receives into an actuator output position sensor data packet. The motor position processors are mounted on the second printed circuit board. Each motor position processor is in operable communication with, and is coupled to receive the motor position data from, a different one of the motor position sensors. Each motor position processor is configured to process the motor position data it receives into a motor position sensor data packet. The first sensor communication bus is in operable communication with a first one of the actuator output position processors, with a second one of the motor position processors, and with the actuator controller. The first sensor communication bus is configured to supply, to the actuator controller, the actuator output position sensor data packet it receives and the motor position sensor data packet it receives. The second sensor communication bus is in operable communication with a second one of the actuator output position processors, with a first one of the motor position processors, and with the actuator controller. The second sensor communication bus is configured to supply, to the actuator controller, the actuator output position sensor data packet it receives and the motor position sensor data packet it receives.

In another embodiment, an actuator includes an actuator motor, an actuator output interface, a first printed circuit board, a second printed circuit board, a plurality of actuator output position sensors, a plurality of motor position sensors, a plurality of actuator output position processors, a plurality of motor position processors, a first sensor communication bus, and a second sensor communication bus. The actuator motor is moveable to a rotational motor position. The actuator output interface is coupled to the motor and is adapted to be coupled to the component. The actuator output interface is moveable to an actuator output position. Each actuator output position sensor is mounted on the first printed circuit board and is configured to supply actuator position data representative of the actuator output position. Each motor position sensor is mounted on the second printed circuit board and is configured to supply motor position data representative of the rotational motor position. The actuator output position processors are mounted on the first printed circuit board. Each actuator output position processor is in operable communication with, and is coupled to receive the actuator position data from, a different one of the actuator output position sensors. Each actuator output position processor is configured to process the actuator position data it receives into an actuator output position sensor data packet. The motor position processors are mounted on the second printed circuit board. Each motor position processor is in operable communication with, and is coupled to receive the motor position data from, a different one of the motor position sensors. Each motor position processor is configured to process the motor position data it receives into a motor position sensor data packet. The first sensor communication bus is in operable communication with a first one of the actuator output position processors, with a second one of the motor position processors, and with the actuator controller. The first sensor communication bus is configured to supply the actuator output position sensor data packet it receives and the motor position sensor data packet it receives. The second sensor communication bus is in operable communication with a second one of the actuator output position processors, with a first one of the motor position processors, and with the actuator controller. The second sensor communication bus is configured to supply the actuator output position sensor data packet it receives and the motor position sensor data packet it receives

In yet another embodiment, an actuator control system includes an actuator controller and an actuator. The actuator controller is coupled to receive position command data that is indicative of a commanded position of a component and is configured, upon receipt of the position command data, to generate and supply actuator commands. The actuator is in operable communication with, and is coupled to receive the actuator commands from, the actuator controller. The actuator is configured, upon receipt of the actuator commands, to move the component to the commanded position and to supply feedback data to the actuator controller. The actuator includes an actuator motor, an actuator output interface, a first printed circuit board, a second printed circuit board, a plurality of actuator output position sensors, a motor position sensor, a plurality of actuator output position processors, a motor position processor, and a plurality of sensor communication buses. The actuator motor is moveable to a rotational motor position. The actuator output interface is coupled to the motor and is adapted to be coupled to the component. The actuator output interface is moveable to an actuator output position. Each actuator output position sensor is mounted on the first printed circuit board and is configured to supply actuator position data representative of the actuator output position. The motor position sensor is mounted on the second printed circuit board and is configured to supply motor position data representative of the rotational motor position. The actuator output position processors are mounted on the first printed circuit board. Each actuator output position processor is in operable communication with, and is coupled to receive the actuator position data from, a different one of the actuator output position sensors. Each actuator output position processor is configured to process the actuator position data it receives into an actuator output position sensor data packet. The motor position processor is mounted on the second printed circuit board. The motor position processor is in operable communication with, and is coupled to receive the motor position data from, the motor position sensor. The motor position processor is configured to process the motor position data it receives into a motor position sensor data packet. Each sensor communication bus is in operable communication with a different one of the position processors and with the actuator controller. Each sensor communication bus is configured to at least supply the single sensor data packet it receives to the actuator controller.

Furthermore, other desirable features and characteristics of the actuator control system and actuator will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 depicts a functional block diagram of one embodiment of an aircraft fly-by-wire flight control system;
FIG. 2 depicts a high-level functional block diagram of one example embodiment of an actuator control system that may be used to implement the flight control surface actuator of FIG. 1;
FIG. 3 depicts a more detailed functional block diagram of the example actuator control system of FIG. 2; and
FIG. 4 depicts a detailed functional block diagram of the another embodiment of an actuator control system that may be used to implement the flight control surface actuator of FIG. 1.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

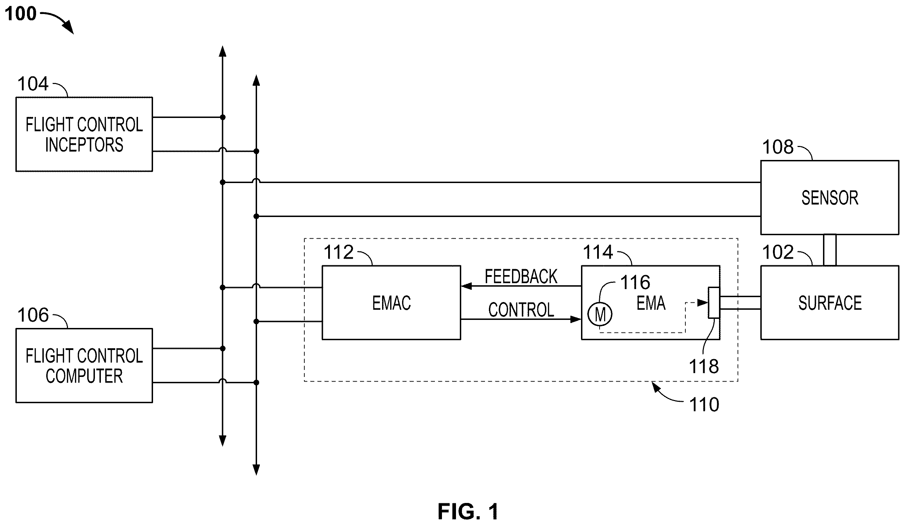

Referring to FIG. 1, a functional block diagram of one embodiment of an aircraft fly-by-wire flight control system 100 is depicted. For simplicity, ease of illustration, and ease of description, the depicted system 100 is configured to control the position of a single flight control surface 102. It will be appreciated, however, that in other embodiments, such as the one described further below, the system 100 may be configured to control multiple flight control surfaces.

The depicted system 100 includes one or more flight control inceptors 104, at least one flight control computer 106, at least one digital surface position sensor 108, and an actuator control system 110 - which includes at least one actuator controller 112 and at least one actuator 114. Before proceeding further it is noted that because the actuator control system 110 is, at least in the depicted embodiment, being implemented in an aircraft fly-by-wire flight control system 100, the actuator controller 112 and the actuator 114 may also be referred to herein as a flight control surface actuator controller 112 and a flight control surface actuator 114.

With the above in mind, the flight control surface actuator controller 112 is coupled to receive, from at least one flight control computer 106, position command data (e.g., flight control surface position command data) that is indicative of a commanded position of a component (e.g., the flight control surface 102). The flight control surface actuator controller 112 is configured, upon receipt of the position command data, to generate and supply actuator commands (e.g., flight control surface actuator commands) to the flight control surface actuator 114.

The flight control surface actuator(s) 114 is coupled to receive the flight control surface actuator commands from the flight control surface actuator controller 112 and is configured, upon receipt thereof, to move the flight control surface 102 to the commanded position. It will be appreciated that the flight control surface actuator(s) 114 may be implemented using any one of numerous known actuators, but in the depicted embodiment it is implemented using an electromechanical actuator (EMA), which includes, for example, an actuator motor 116 that is moveable to a rotational position, and an actuator output interface 118 that is coupled to the motor 116 and is adapted to be coupled to a component, such as the flight control surface 102, and is moveable to an actuator output position. One specific example of a suitable electromechanical actuator is, for example, a motor-driven ball screw actuator. As FIG. 1 also depicts, and as will be described in more detail below, the flight control surface actuator(s) 114 supplies feedback (e.g., position feedback) to the flight control surface actuator controller 112.

The flight control inceptor(s) 104 is in operable communication with the flight control surface actuator controller(s) 112 and the flight control computer(s) 106. The flight control inceptor(s) 104 is configured to receive user input from a user (e.g., a pilot) and is configured, in response to the user input, to supply inceptor command data to the flight control computer(s) 106. The flight control inceptor(s) 104 may be implemented as a yoke, a side stick, a collective, and/or a rudder pedal, just to name a few non-limiting examples.

The flight control computer(s) 106 is in operable communication with the flight control inceptor(s) 104 and the flight control surface actuator controller(s) 112. The flight control computer(s) 106 is coupled to receive the inceptor command data from the flight control inceptor(s) 104 and is configured, upon receipt of the inceptor data, to generate and supply the flight control surface position command data to the flight control surface actuator controller 112.

The surface position sensor(s) 108 is in operable communication with at least the flight control computer(s) 106. The surface position sensor(s) 108 is coupled to, and is configured to sense the position of, the aircraft flight control surface 102 and supply a position signal representative thereof to the flight control computer(s) 106.

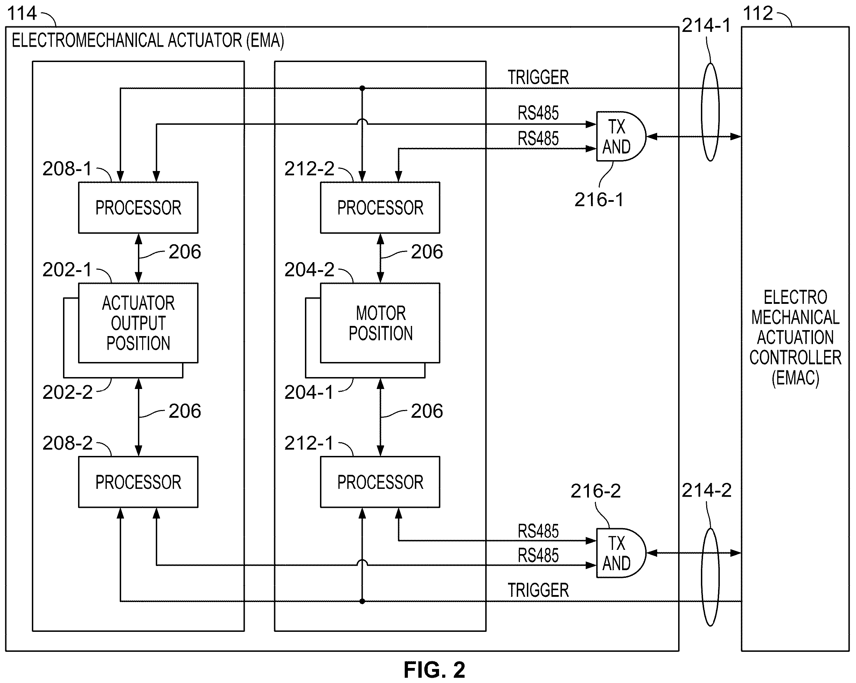

As noted above, the flight control surface actuator(s) 114 supplies feedback (e.g., position feedback) to the flight control surface actuator controller 112. In the depicted embodiment, and as shown more clearly in FIG. 2, the position feedback is supplied from a plurality of actuator output/output rod position sensors 202 (e.g., 202-1, 202-2) and a plurality of motor/motor shaft position sensors 204 (e.g., 204-1, 204-2). In particular, the actuator output/output rod position sensors 202 are each configured to supply actuator position data representative of the actuator output position, and the motor/motor shaft position sensors 204 are each configured to supply motor position data representative of the motor rotational position. As depicted in FIG. 2, each of the sensors 202, 204 supplies its position data via a different one of a plurality of sensor communication interfaces 206. The sensor communication interfaces 206 can be similar or dissimilar between all position sensors 202, 204. That is, all of the sensors 202, 204 may use one type of sensor communication interface 206 (similar), or each position sensor 202, 204 may use different types of sensor communication interfaces 206 (dissimilar). In one particular embodiment, which is described in more detail below, the all of the sensors 202, 204 use one type of sensor communication interface 206; for example, a serial peripheral interface (SPI).

The actuator output position data supplied from each of the actuator output/output rod position sensors 202 is received, via one of the sensor communication interfaces 206, by a different one of a plurality of actuator output position processors 208 (208-1, 208-2), such as a field programmable gate array (FPGA) or a microcontroller unit (MCU). Each of the actuator output positions processors 208 is configured to process the actuator position data it receives into an actuator output position sensor data packet.

Similarly, the motor position data supplied from each of the motor/motor shaft position sensors 204 is received, via one of the sensor communication interfaces 206, by a different one of a plurality of motor position processors 212 (212-1, 212-2), such as a field programmable gate array (FPGA) or a microcontroller unit (MCU). Each of the motor position processors 212 is configured to process the motor position data it receives into a motor position sensor data packet.

The actuator output position sensor data packets and the motor position sensor data packets are transmitted from the flight control surface actuator 114 to the flight control surface actuator controller 112 via a plurality of sensor communication buses 214 - a first sensor communication bus 214-1 and a second sensor communication bus 214-2. The first sensor communication bus 214-1 is in operable communication with a first one of the actuator output position processors 208-1, with a second one of the motor position processors 212-2, and with the flight control surface actuator controller 112. The first sensor communication bus 214-1 is configured to supply, to the flight control surface actuator controller 112, the actuator output position sensor data packet it receives and the motor position sensor data packet it receives. The second sensor communication bus 214-2 is in operable communication with a second one of the actuator output position processors 208-2, with a first one of the motor position processors 212-1, and with the actuator controller 112. The second sensor communication bus 214-2 is configured to supply, to the actuator controller 112, the actuator output position sensor data packet it receives and the motor position sensor data packet it receives.

Before proceeding further, it will be appreciated that that the sensor communication buses 214 may be implemented using any one of numerous types of communication buses. For example, the sensor communication buses 214 may be implemented using a CAN bus or an RS485 bus. In the depicted embodiment, RS485 communication buses are used. With this implementation, the position data from two different sensors 202, 204 can be easily combined into one bus by using an AND gate 216 (e.g., 216-1, 216-2) for data transmission and the sensors 202, 204 can be synchronized using the trigger signal. For example, the first actuator output/output rod position sensors 202-1 can transmit its position data, via the first actuator output position processor 208-1, on the first sensor communication bus 214-1 with a rising edge of the associated trigger signal, and the first motor/motor shaft position sensor 204-1 can transmit its position data, via the first motor position processor 212-1, on the first sensor communication bus 214-1 with a falling edge of the associated trigger signal. Similarly, the second actuator output/output rod position sensors 202-2 can transmit its position data, via the second actuator output position processor 208-2, on the second sensor communication bus 214-2 with a rising edge of the associated trigger signal, and the second motor/motor shaft position sensors 204-2 can transmit its position data, via the second motor position processor 212-2, on the second sensor communication bus 214-2 with a falling edge of the associated trigger signal.

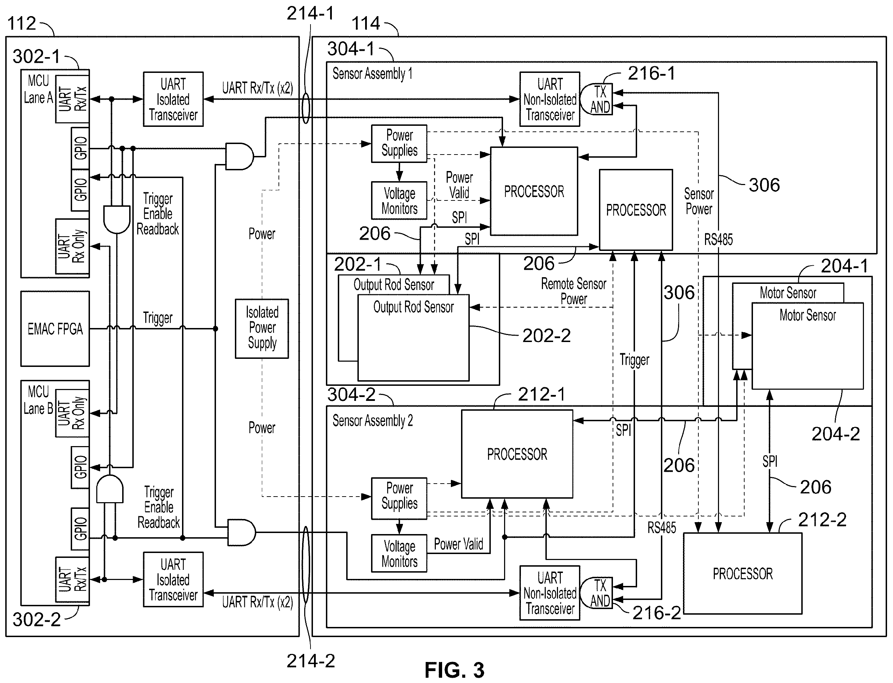

Regardless of how the sensor communication buses 214 are specifically implemented, and as FIG. 3 depicts, each is in operable communication with an independent actuator control processor 302 (302-1, 302-2) in the flight control surface actuator controller 112. This allows for redundancy while simultaneously reducing the number of communication buses. It will be appreciated that the sensor communication buses 214 may also be similar or dissimilar.

In some embodiments, and as FIG. 3 further depicts, two separate printed circuit boards 302 may be used - a first printed circuit board 304-1 and a second printed circuit board 304-2. In such embodiments, each printed circuit board 304 has mounted thereon a plurality of the same type of position sensor 202 or 204, and either a plurality of actuator output position processors 208 or a plurality of motor position processors 212. In the depicted embodiment, the first printed circuit board 304-1 has the plurality of actuator output/output rod position sensors 202 and the plurality of actuator output position processors 208 mounted thereon, and the second printed circuit board 304-2 has the plurality of motor/motor shaft position sensor 204 and the plurality of motor position processors 212 mounted thereon.

As FIG. 3 also depicts, each printed circuit board 304 includes two different types of communication interfaces. The first type includes the previously mentioned sensor communication interfaces 206 and the second type includes what is referred to herein as inter-circuit-board communication interfaces 306. The sensor communication interfaces 206, as noted above, are used for communications between the actuator output position sensors 202 and the actuator output position processors 208, and between the motor position sensors 204 and the motor position processors 212. The inter-circuit-board communication interfaces 306 are used for communications between the second actuator output position processor 208-2 and the AND gate 216-2 mounted on the second printed circuit board 304-2, and for communications between the second motor position processor 212-2 and the AND gate 216-1 mounted on the first printed circuit board 304-1. The inter-circuit-board communication interfaces 306 may be implemented using any one of numerous types of communication buses. For example, the inter-circuit-board communication interfaces 306 may be implemented using a CAN or RS485. In the depicted embodiment, RS485 communication is used.

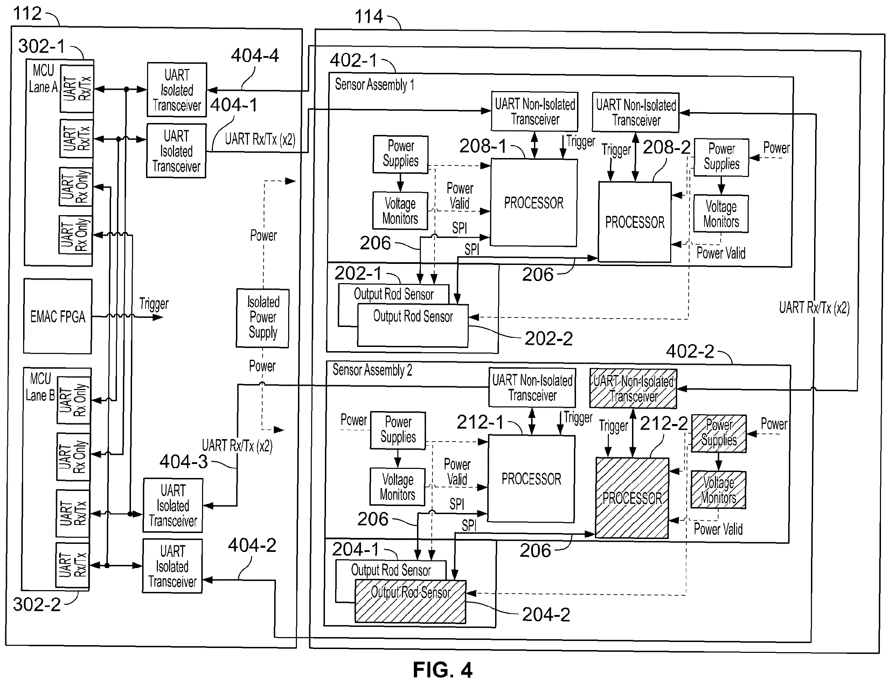

In another embodiment, which is depicted in FIG. 4, the actuator 114 also includes the motor 116 (not depicted in FIG. 4), the actuator output interface 118 (also not depicted in FIG. 4), and additionally includes a first printed circuit board 402-1, which has the plurality of actuator output position sensors 202 and the plurality of actuator output position processors 208 mounted thereon, and a second printed circuit board 402-2, which has the plurality of motor position sensors 204 and the plurality of motor position processors 212 mounted thereon.

As with the previously described embodiment, the actuator output position sensors 202 are each configured to supply actuator position data representative of the actuator output position, and each actuator output position processor 208 is in operable communication with, and is coupled to receive the actuator position data from, a different one of the actuator output position sensors 202. Each actuator output position processor 208 is additionally configured to process the actuator position data it receives into an actuator output position sensor data packet. Also similar to the previously described embodiment, the motor position sensors 204 are configured to supply motor position data representative of the rotational motor position, and the motor position actuator processors 212 are in operable communication with, and are coupled to receive the motor position data from, a different one of the motor position sensors 204. Each motor position processor 212 is additionally configured to process the motor position data it receives into a motor position sensor data packet.

The actuator 114 additionally includes a plurality of sensor communication buses 404 (e.g., 404-1, 404-2, 404-3, 404-4). In this embodiment, however, each sensor communication bus 404 is in operable communication with a different one of the position processors 208, 212, and with the actuator controller 112, and each sensor communication bus 404 is configured to at least supply the single sensor data packet it receives to the actuator controller 112. More specifically, a first sensor communication bus 404-1 is in operable communication the first actuator output position processor 208-1, a second sensor communication bus 404-2 is in operable communication the second actuator output position processor 208-2, a third sensor communication bus 404-3 is in operable communication the first motor position processor 212-1, and a fourth sensor communication bus 404-4 is in operable communication the second motor position processor 212-2. As FIG. 4 additionally depicts, the first and fourth sensor communication buses 404-1, 404-4 are in operable communication with a first one of the independent actuator control processors 302-1, and the second and third sensor communication buses 404-2, 404-3 are in operable communication with a second one of the independent actuator control processors 302-2.

It will be appreciated that the sensor communication buses 404 may be implemented using any one of numerous types of communication buses. For example, the sensor communication buses 404 may be implemented using half duplex bidirectional buses, full duplex bidirectional buses, unidirectional buses with external trigger signals, or unidirectional buses without external trigger signals, just to name a few. The sensor communication buses 404 may also use any one of numerous robust communication protocols, such as RS485, RS422, or BiSS, or any other suitable communication protocol.

It should be noted that in the embodiment depicted in FIG. 4, the second motor sensor 204-2 and the second motor position processor 212-2 (and all associated support circuitry) are illustrated using cross-hatching. This is because, at least in some embodiments, the actuator 114 may be implemented using only the first motor sensor 204-1 and the first motor position processors 212-1, and will thus also not include the fourth sensor communication bus 404-4. For these embodiments, verification of the first motor output sensor 204-1 can be implemented in the actuator controller 112 based on the known gear ratio in the actuator 114. Thus, the second, redundant motor position sensor 204-2, and the second, redundant motor position processor 212-2 (and all associated support circuitry) need not be included.

The systems described herein save weight in, for example, Urban Air Mobility and Unmanned Aerial vehicles (UAM/UAV) where low weight is key enabler of the technology. The discloses system is not limited to UAM/UAV environments, but can find application in other aerospace environments where redundant data transmission is needed from multiple sensors.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth herein.

## Claims

1. An actuator control system, comprising:
an actuator controller coupled to receive position command data that is indicative of a commanded position of a component, the actuator controller configured, upon receipt of the position command data, to generate and supply actuator commands; and
an actuator in operable communication with, and coupled to receive the actuator commands from, the actuator controller, the actuator configured, upon receipt of the actuator commands, to move the component to the commanded position and to supply feedback data to the actuator controller, the actuator including:
an actuator motor moveable to a rotational motor position,
an actuator output interface coupled to the motor and adapted to be coupled to the component, the actuator output interface moveable to an actuator output position,
a first printed circuit board,
a second printed circuit board,
a plurality of actuator output position sensors, each actuator output position sensor mounted on the first printed circuit board and configured to supply actuator position data representative of the actuator output position,
a plurality of motor position sensors, each motor position sensor mounted on the second printed circuit board and configured to supply motor position data representative of the rotational motor position,
a plurality of actuator output position processors mounted on the first printed circuit board, each actuator output position processor in operable communication with, and coupled to receive the actuator position data from, a different one of the actuator output position sensors, each actuator output position processor configured to process the actuator position data it receives into an actuator output position sensor data packet,
a plurality of motor position processors mounted on the second printed circuit board, each motor position processor in operable communication with, and coupled to receive the motor position data from, a different one of the motor position sensors, each motor position processor configured to process the motor position data it receives into a motor position sensor data packet,
a first sensor communication bus in operable communication with a first one of the actuator output position processors, with a second one of the motor position processors, and with the actuator controller, the first sensor communication bus configured to supply, to the actuator controller, the actuator output position sensor data packet it receives and the motor position sensor data packet it receives, and
a second sensor communication bus in operable communication with a second one of the actuator output position processors, with a first one of the motor position processors, and with the actuator controller, the second sensor communication bus configured to supply, to the actuator controller, the actuator output position sensor data packet it receives and the motor position sensor data packet it receives.

2. The system of claim 1, wherein the actuator controller comprises:
a first actuator control processor in operable communication with the first sensor communication bus; and
a second actuator control processor in operable communication with the second sensor communication bus.

3. The system of claim 1, wherein:
the plurality of motor position sensors includes a first motor position sensor and a second motor position sensor;
the plurality of actuator position sensors includes a first actuator position sensor and a second actuator position sensor; and
the plurality of actuator output position processors includes a first actuator output position processor and a second actuator output position processor; and
the plurality of motor position processors includes a first motor position processor and a second motor position processor.

4. The system of claim 3, wherein:
the first actuator position sensor is in operable communication with the first actuator output position processor;
the second actuator position sensor is in operable communication with the second actuator output position processor;
the first motor position sensor is in operable communication with the first motor position processor; and
the second motor position sensor is in operable communication with the second motor position processor.

5. The system of claim 4, wherein:
the first actuator position sensor is in operable communication with the first actuator output position processor via a first type of communication interface;
the second actuator position sensor is in operable communication with the second actuator output position processor the first type of communication interface;
the first motor position sensor is in operable communication with the first motor position processor via the first type of communication interface; and
the second motor position sensor is in operable communication with the second motor position processor via the first type of communication interface.

6. The system of claim 5, wherein:
the first sensor communication bus is in operable communication with the second motor position processor via a second type of communication interface; and
the second sensor communication bus is in operable communication with the second actuator output position processor via the second type of communication interface.
